# EUROPEAN PATENT APPLICATION

(11) **EP 4 329 068 A1**
(43) Date of publication of application: **28.02.2024**
(21) Application number: 22821843.4
(22) Date of filing: 26.10.2022
(51) Int. Cl.: H01M 50/291

(54) **TRAY ASSEMBLY OF BATTERY, AND BATTERY MODULE**

(30) Priority: 17.06.2022 CN 202210691720; 17.06.2022 CN 202221526061 U
(71) Applicant: Eve Power Co., Ltd., Jingmen, Hubei 448000 (CN)
(72) Inventor: QIU, Wencong, Jingmen, Hubei 448000 (CN); LI, Fan, Jingmen, Hubei 448000 (CN); CHEN, Zhiwei, Jingmen, Hubei 448000 (CN); CHEN, Zhaohai, Jingmen, Hubei 448000 (CN)
(74) Representative: Petraz, Gilberto Luigi
(86) International application number: PCT/CN2022/127670
(87) International publication number: WO 2023/240882

(57) **Abstract**

Disclosed are a battery tray assembly and a battery module. The battery tray assembly includes a plastic bracket and a tray, wherein the plastic bracket includes a frame and a plurality of fixing rings which are connected with each other; the fixing rings are provided with limiting protrusions, and the limiting protrusions fit the outer side wall of cells. The cells can be positioned by the limiting protrusions and the fixing rings, so that the assembly accuracy is high; the plastic bracket is installed in the tray, and the tray is provided with through avoidance holes corresponding to the fixing rings.

## Description

The present disclosure claims priority from Chinese Patent Application No. 202210691720.1 filed to the CNIPA on June 17, 2022 and Chinese Patent Application No. 20221526061.8 filed to the CNIPA on June 17, 2022, all contents of which are incorporated herein by reference.

### TECHNICAL FIELD

The present application relates to the technical field of batteries, for example, relates to a battery tray assembly and a battery module.

### BACKGROUND

In the related art, a plastic bracket or metal bracket is generally adopted as a tray structure of a battery module, of which the strength of the plastic bracket is poor, during the use of the battery module, deformation is likely to occur due to the fact that the cells are hot, so that the cells are not fixed well, and the plastic bracket is not high in fabrication size precision during fabrication, as a result, the cells are poor in assembly precision; however, when some materials with high strength and high precision are used, the cost is increased, e.g., although the metal bracket has good strength, the insulation performance of the metal bracket is poor, it is required to add insulation films or spray insulation layers, so that the fabrication process is cumbersome and the cost is high.

### SUMMARY

The present application provides a battery tray assembly and a battery module, wherein the battery tray assembly has high mechanical strength and good insulation performance, and cells can be accurately positioned and are high in assembly precision.

In a first aspect, the embodiments of the present application provide a battery tray assembly, configured to fix a plurality of cells, and including:
a plastic bracket, including a frame and a plurality of fixing rings which are connected with each other, wherein adjacent fixing rings are connected with each other, the joint between adjacent fixing rings is provided with a limiting protrusion, the limiting protrusion includes a cambered surface, the cambered surface fits the outer side wall of the cell, and the bottom of the cell is connected with the upper end face of the fixing ring; and
a tray, wherein the plastic bracket is arranged in the tray, and the tray is provided with through avoidance holes corresponding to the fixing rings.

In one embodiment, the battery tray assembly includes structural adhesive, wherein the structural adhesive fixedly connects the plastic bracket, the tray and the cells.

In one embodiment, the limiting protrusion is of a trapezoidal structure, and a V-shaped groove is formed on the side end face of the limiting protrusion which does not fit the cell.

In one embodiment, the side of the fixing ring facing the tray extends outwards to be provided with a first annular side wall and a second annular side wall, the first annular side wall is connected with the outer ring of the fixing ring, the second annular side wall is connected with the inner ring of the fixing ring, an annular adhesive storage groove is formed between the first annular side wall and the fixing ring, and an annular adhesive storage groove is formed between the second annular side wall and the fixing ring.

In one embodiment, the diameter of the avoidance hole is larger than the diameter of the inner ring of the fixing ring, the diameter of the avoidance hole is smaller than the diameter of the outer ring of the fixing ring, the height of the first annular side wall is smaller than the height of the second annular side wall, the end of the first annular side wall abuts against the upper end face of the tray, the end of the second annular side wall passes through the avoidance hole, the end of the second annular side wall is bent to form an annular flange, and the annular flange abuts against the lower end face of the tray.

In one embodiment, the first annular side wall is provided with an adhesive inlet, the adhesive inlet is located at the end of the first annular side wall, and the adhesive inlet communicates with the annular adhesive storage groove.

In one embodiment, the lower end face of the tray is provided with a reinforcing rib, and the reinforcing rib is arranged around the avoidance holes.

In an embodiment, the tray includes a bottom plate and side plates which are connected with each other, and the avoidance holes are formed in the bottom plate.

In one embodiment, the upper end of the side plate extends outwards to form a flange, and the upper end face of the flange is provided with a hanging part.

In one embodiment, the outer wall of the side plate is convexly provided with a limiting block.

In a second aspect, the embodiments of the present application provide a battery module, which includes a plurality of cells and the battery tray assembly in any of the above solutions, wherein the plurality of cells are fixed in the battery tray assembly.

The present application has the beneficial effects that:
the present application provides a battery tray assembly. The battery tray assembly includes a plastic bracket and a tray, of which the plastic bracket includes a frame and a plurality of fixing rings which are connected with each other; the joint between adjacent fixing rings is provided with a limiting protrusion, a cell is jointly fixed by the limiting protrusions and the fixing rings, the surface of the limiting protrusion in contact with the cell is a cambered surface, and the cambered surface fits the outer side wall of the cell; the plastic bracket is installed in the tray; the tray is provided with through avoidance holes corresponding to the fixing rings; and the plastic bracket, the tray and the cells are fixedly connected by structural adhesive. By combining the plastic bracket with the tray, the tray ensures that the battery tray assembly has sufficient strength, and the plastic bracket ensures that the insulation performance between the cells and the battery tray assembly is good, short circuit is less likely to occur, and the safety performance is good; moreover, through the arrangement of the limiting protrusions, the cells can be accurately positioned and are high in assembly precision;
the present application provides a battery module, which includes a plurality of cells and the battery tray assembly, wherein the plurality of cells are fixed in the battery tray assembly, and the battery tray assembly has high strength, so that the deformation caused by the fact that the cells are hot is avoided; and the battery tray assembly has good insulation performance and is not easy to short-circuit, and the cells can be accurately positioned during assembly and are high in assembly precision.

### BRIEF DESCRIPTION OF THE DRAWINGS

Fig. 1 is an exploded view of a battery tray assembly provided in an embodiment of the present application;
Fig. 2 is a structural schematic diagram of a plastic bracket provided in an embodiment of the present application;
Fig. 3 is a partial enlarged view of part A in Fig. 2;
Fig. 4 is a structural schematic diagram of a plastic bracket provided in an embodiment of the present application at another angle of view;
Fig. 5 is a partial enlarged view of part B in Fig. 4;
Fig. 6 is a structural schematic diagram of an assembled battery tray assembly provided in an embodiment of the present application;
Fig. 7 is a partial enlarged view of part C in Fig. 6;
Fig. 8 is a structural schematic diagram of an assembled battery tray assembly provided in an embodiment of the present application at another angle of view; and
Fig. 9 is a partial enlarged view of part D in Fig. 8.

In the figures:
100, plastic bracket; 110, frame; 120, fixing ring; 130, limiting protrusion; 1301, cambered surface; 1302, V-shaped groove; 140, first annular side wall; 1401, adhesive inlet; 150, second annular side wall; 160, annular adhesive storage groove;
200, tray; 201, avoidance hole; 210, bottom plate; 220, side plate; 221, limiting block; 230, flange; 231, hanging part; 240, reinforcing rib;
300, structural adhesive.

### DETAILED DESCRIPTION OF ILLUSTRATED EMBODIMENTS

In the description of the present application, it should be noted that the orientation or positional relationships indicated by terms such as "central", "upper", "lower", "left", "right", "vertical", "horizontal", "inner" and "outer" are the orientation or positional relationships based on the accompanying drawings, are merely intended to facilitate description of the present application and simplifying of the description, rather than to indicate or imply that the device or element referred to must have a specific orientation or be constructed and operated in a specific orientation. In addition, the terms "first" and "second" are only used for descriptive purposes, and cannot be understood as indicating or implying relative importance. Wherein, the terms "first position" and "second position" are two different positions. Moreover, the first feature being "on", "above and "over" the second feature includes that the first feature is directly above and obliquely above the second feature, or only indicates that the horizontal height of the first feature is higher than that of the second feature. The first feature being "under", "below" and "beneath" the second feature includes that the first feature is directly below and obliquely below the second feature, or only indicates that the horizontal height of the first features is smaller than that of the second feature.

In the description of the present application, it should be noted that the terms "installed", "connected" and "connection" should be understood in a broad sense unless otherwise specified and defined, for example, "connection" may be fixed connection or detachable connection or integrated connection, may be mechanical connection or electric connection, and may be direct connection or indirect connection through an intermediate medium, or internal communication of two elements. For a person having ordinary skill in the art, the specific meanings of the above terms in the present application can be understood according to specific situations.

Embodiments of the present application will be described below, examples of which are shown in the accompanying drawings, in which the same or similar reference numerals refer to the same or similar elements or elements with the same or similar functions throughout. The embodiments described below with reference to the drawings are exemplary and only used to explain the present application.

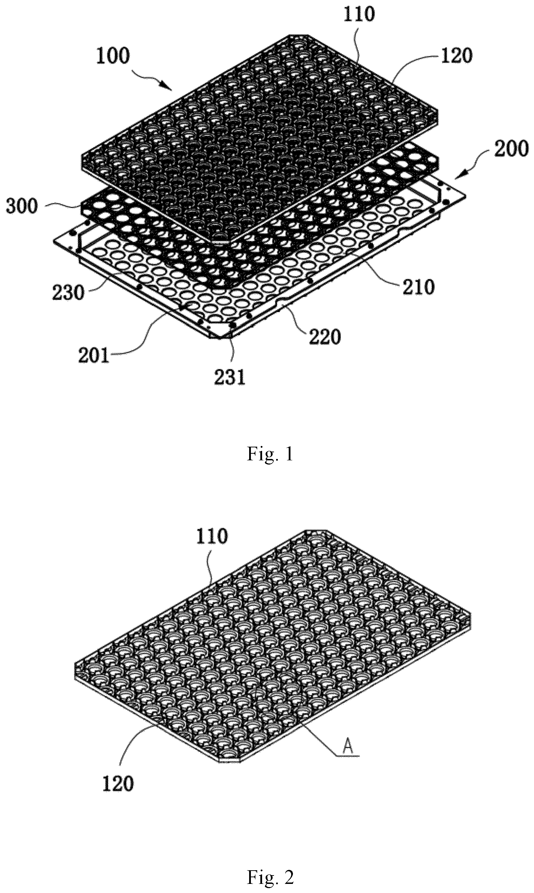

As shown in Figs. 1-3, this embodiment provides a battery tray assembly, which includes a plastic bracket 100 and a tray 200. The plastic bracket 100 is installed in the tray 200, and the plastic bracket 100, the tray 200 and cells are fixedly connected by structural adhesive 300. The plastic bracket 100 includes a frame 110 and a plurality of fixing rings 120 which are connected with each other. The fixing rings 120 are arrayed in a first direction and a second direction. It should be noted that in this embodiment, the first direction is the length direction of the frame 110, and the second direction is the width direction of the frame 110. Adjacent fixing rings 120 are connected with each other, the joint between adjacent fixing rings 120 is provided with a limiting protrusion 130 which includes a cambered surface 1301, the cambered surface 1301 fits the outer side wall of the cell, and the bottom of the cell is connected with the upper end face of the fixing ring 120. Each limiting protrusion 130 includes two cambered surfaces 1301, the two cambered surfaces 1301 are oppositely arranged, and the two cambered surfaces 1301 respectively fit the side walls of two adjacent cells.

Exemplarily, in this embodiment, two adjacent rows of fixing rings 120 arranged in the first direction are staggered, so that three adjacent fixing rings 120 define a triangular structure; each fixing ring 120 is connected with six adjacent fixing rings 120, six limiting protrusions 130 are arranged at the joints between the fixing ring 120 and the six adjacent fixing rings 120, and the six limiting protrusions 130 and the fixing ring 120 jointly position one cell. The limiting protrusions 130 can clamp the side wall of the cell, and the bottom of the cell abuts against the upper end face of the fixing ring 120, so that the limiting protrusions 130 and the fixing ring 120 can position the cell and fix the cell in advance, thus ensuring the accurate installation of the cell, and facilitating the automatic placement of the cell.

In some embodiments, the frame 110 and the fixing rings 120 may be integrally injection-molded. The frame 110 and the fixing ring 120 are made of plastic materials or other materials with good insulation performance, and the tray 200 is made of a metal material. Since the bottom of the cell abuts against the fixing ring 120, the cell will not be in direct contact with the tray 200, the insulation performance is good, short circuit is avoided and the safety performance is high. In addition, generally speaking, the bottom of the cell is provided with a pressure relief structure, the tray 200 is provided with a through avoidance hole 201 corresponding to the fixing ring 120, the fixing ring 120 and the avoidance hole 201 at the bottom of the tray 200 can avoid the pressure relief structure, when the pressure inside the cell is too high, the pressure relief structure can be forced open and flow out of the battery module through the fixing ring 120 and the avoidance hole 201, thus avoiding explosion and ensuring the safety of users.

In some embodiments, the tray 200 may be made of a stainless steel material, so that it is ensured that the tray 200 has high mechanical strength, thus can provide good support for the plastic bracket 100, and deformation is less likely to occur. In some other embodiments, the tray 200 may be integrally injection-molded from an aluminum material, on the one hand, the inj ection-molded tray 200 has high manufacturing accuracy, and the positioning of the avoidance holes 201 in the tray 200 is accurate; and on the other hand, the aluminum material also has high mechanical strength, thus can provide good support for the plastic bracket 100.

Optionally, the plastic bracket 100, the tray 200 and the cells in this embodiment may be fixedly connected by the structural adhesive 300. Exemplarily, during assembly, the plastic bracket 100 is installed in the tray 200, the fixing rings 120 are arranged corresponding to the avoidance holes 201, then, the structural adhesive 300 is filled into the tray 200, so that the structural adhesive 300 can flow into the triangular structure defined by three adjacent fixing rings 120 to fix three adjacent cells. Since all triangular structures are filled with the structural adhesive 300, the structural adhesive 300 can fix all the cells and the plastic tray, the triangular structure is beneficial to shortening the bonding path of the structural adhesive 300 and increases the fixing strength of the cells. The structural adhesive 300 will also flow into the gap between the plastic bracket 100 and the tray 200, thus fixedly connecting the plastic bracket 100 with the tray 200.

As an alternative technical solution, the limiting protrusion 130 is of a trapezoidal structure, and a V-shaped groove 1302 is formed on the side end face of the limiting protrusion 130 that does not fit the cell. By setting the limiting protrusion 130 to be of the trapezoidal structure, the bonding area of the top of the limiting protrusion 130 can be increased under the condition that the limiting size of the bottom of the limiting protrusion 130 is unchanged, so that the strength of cell grouping can be improved, and the fixing effect is good; moreover, the limiting protrusion 130 which is of the trapezoidal structure is easier to demold in the demolding process of injection molding, and the product has a good appearance. On the one hand, the arrangement of the V-shaped groove 1302 prolongs the longest flowing path of the structural adhesive 300, ensures that the structural adhesive 300 can completely fill the gaps between cells, increases the bonding area between the structural adhesive 300 and the limiting protrusion 130, and improves the fixing strength; on the other hand, the arrangement of the V-shaped groove 1302 prolongs the length of the side wall surface of the limiting protrusion 130 in the thickness direction, that is, the lengths of sides at the vertex angle of the triangular structure defined by three fixing rings 120, and the creepage distance between two cells fixed by two adjacent fixing rings 120 is the widths of the two fixing rings 120 in the radial direction plus the lengths of sides at the vertex angle of the triangular structure, thus increasing the creepage distance between two adjacent cells and ensuring the electrical safety. In addition, the arrangement of the V-shaped groove 1302 can also increase the creepage distance between the cell fixed by the fixing ring 120 and the tray 200 in the height direction of the limiting protrusion 130, thus ensuring the electrical safety between the cell and the tray 200.

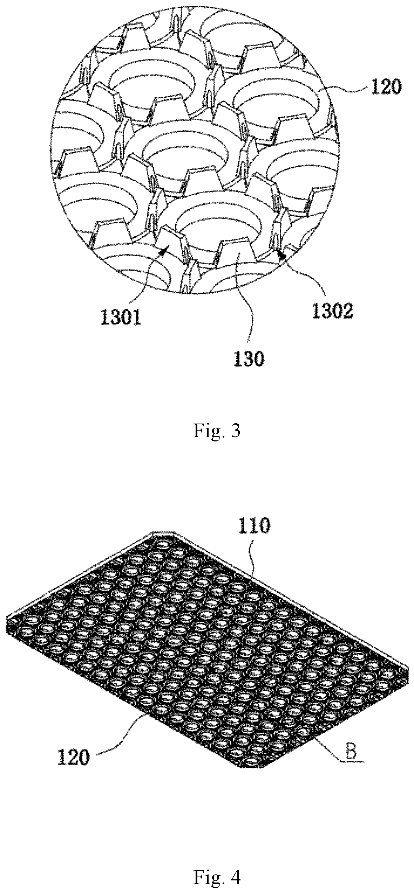

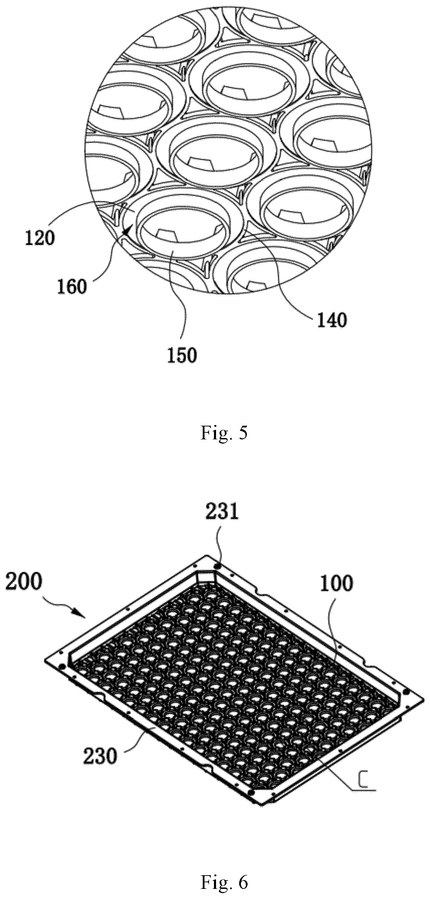

Referring to Figs. 4 and 5, the side of the fixing ring 120 facing the tray 200 extends outwards to be provided with a first annular side wall 140 and a second annular side wall 150. The first annular side wall 140 is connected with the outer ring of the fixing ring 120, and the second annular side wall 150 is connected with the inner ring of the fixing ring 120. An annular adhesive storage groove 160 is formed between the first annular side wall 140 and the fixing ring 120, an annular adhesive storage groove 160 is formed between the second annular side wall 150 and the fixing ring 120, and the structural adhesive 300 can penetrate into the annular adhesive storage groove 160 so as to fixedly connect the plastic bracket 100 with the tray 200.

In one embodiment, the diameter of the avoidance hole 201 is larger than the diameter of the inner ring of the fixing ring 120, the diameter of the avoidance hole 201 is smaller than the diameter of the outer ring of the fixing ring 120, and the height of the first annular side wall 140 is smaller than the height of the second annular side wall 150. After the plastic bracket 100 is installed in the tray 200, the end of the first annular side wall 140 abuts against the upper end face of the tray 200, and the end of the second annular side wall 150 passes through the avoidance hole 201. Due to the arrangement of the annular adhesive storage groove 160, more structural adhesive 300 can be accommodated between the plastic bracket 100 and the tray 200, so that the plastic bracket 100 and the tray 200 can be fixed more firmly. In addition, in order to increase the fixing strength between the plastic bracket 100 and the tray 200, the end of the second annular side wall 150 may be bent by hot riveting, the end of the second annular side wall 150 is bent to form an annular flange, and the annular flange can wrap the avoidance hole 201 of the tray 200 and abuts against the lower end surface of the tray 200.

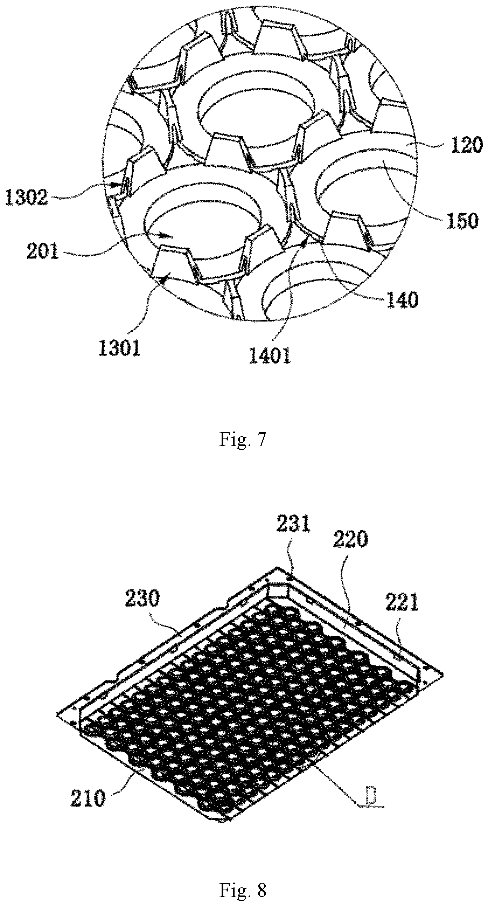

Referring to Figs. 6 and 7, the first annular side wall 140 is provided with an adhesive inlet 1401, the adhesive inlet 1401 is located at the end of the first annular side wall 140, and the adhesive inlet 1401 communicates with the annular adhesive storage groove 160, thus the structural adhesive 300 can conveniently enter the annular adhesive storage groove 160. Exemplarily, a plurality of adhesive inlets 1401 may be provided, and are evenly distributed in the circumferential direction of the first annular side wall 140, and the adhesive inlets 1401 may be arranged at the triangular structure defined by three adjacent fixing rings 120, and located in the sides of the triangular structure, so that the structural adhesive 300 can fill the gap between the tray 200 and the plastic bracket 100, and the overall strength of the battery tray assembly can be improved.

In one embodiment, the tray 200 includes a bottom plate 210 and side plates 220 which are connected with each other. The avoidance holes 201 are formed in the bottom plate 210, and the bottom plate 210 and the side plates 220 together define an accommodating chamber. The plastic bracket 100 is installed in the accommodating chamber, the upper end of the side plate 220 extends outwards to form a flange 230, and the upper end face of the flange 230 is provided with a hanging part 231. The hanging part 231 may be set as a threaded hole for hoisting, so as to facilitate the transportation or assembly process of the battery tray assembly.

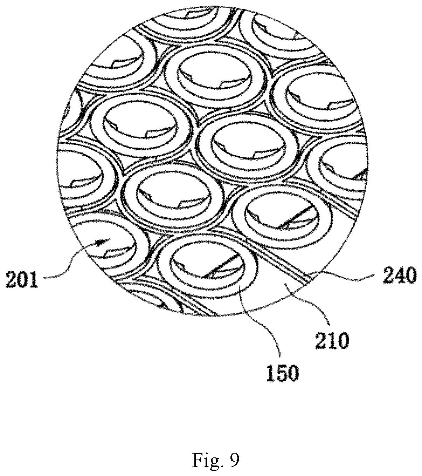

Referring to Figs. 8 and 9, the lower end face of the tray 200 is provided with a reinforcing rib 240, the reinforcing rib 240 is arranged around the avoidance holes 201, and the reinforcing rib 240 can avoid the annular flange formed at the end of the second annular side wall 150, so as to avoid interference with the annular flange that results in poor fixing effect. In some embodiments, the reinforcing rib 240 may be wave-shaped. By providing the wave-shaped reinforcing rib 240, the mechanical strength of the tray 200 can be strengthened, and at the same time, the heat transfer area can be increased. When thermal runaway of the cells occurs, the reinforcing rib 240 can absorb more heat of the high-temperature gas ejected from the cells and guide out the heat generated by the high-temperature gas.

Optionally, the reinforcing rib 240 and the tray 200 may be integrally injection-molded, so that steps for processing the tray 200 are reduced, the manufacturing process is simple, and the connection strength between the reinforcing rib 240 and the tray 200 is high.

In some embodiments, the outer wall of the side plate 220 of the tray 200 is convexly provided with a limiting block 221. Through the arrangement of the limiting blocks 221, the battery tray assembly is convenient to position, thus ensuring the high assembly accuracy of the battery tray assembly.

The present application also provides a battery module, which includes a plurality of cells and the above-mentioned battery tray assembly, the plurality of cells are fixed in the battery tray assembly, and the battery tray assembly has high strength, so that deformation caused by the fact that the cells are hot can be avoided; moreover, the battery tray assembly has good insulation performance, and is not easy to short-circuit, and the cells can be accurately positioned during assembly and are high in assembly precision.

## Claims

1. A battery tray assembly, configured to fix a plurality of cells, and comprising:
a plastic bracket (100), comprising a frame (110) and a plurality of fixing rings (120) which are connected with each other, wherein adjacent fixing rings (120) are connected with each other, a joint between adjacent fixing rings (120) is provided with a limiting protrusion (130), the limiting protrusion (130) comprises a cambered surface (1301), the cambered surface (1301) fits an outer side wall of the cell, and a bottom of the cell is connected with an upper end face of the fixing ring (120); and
a tray (200), wherein the plastic bracket (100) is arranged in the tray (200), and the tray (200) is provided with through avoidance holes (201) corresponding to the fixing rings (120).

2. The battery tray assembly according to claim 1, comprising structural adhesive (300), wherein the structural adhesive (300) fixedly connects the plastic bracket (100), the tray (200) and the cells.

3. The battery tray assembly according to claim 1, wherein the limiting protrusion (130) is of a trapezoidal structure, and a V-shaped groove (1302) is formed on the side end face of the limiting protrusion (130) which does not fit the cell.

4. The battery tray assembly according to claim 1, wherein a side of the fixing ring (120) facing the tray (200) extends outwards to be provided with a first annular side wall (140) and a second annular side wall (150), the first annular side wall (140) is connected with the outer ring of the fixing ring (120), the second annular side wall (150) is connected with an inner ring of the fixing ring (120), an annular adhesive storage groove (160) is formed between the first annular side wall (140) and the fixing ring (120), and an annular adhesive storage groove (160) is formed between the second annular side wall (150) and the fixing ring (120).

5. The battery tray assembly according to claim 4, wherein a diameter of the avoidance hole (201) is larger than the diameter of the inner ring of the fixing ring (120), the diameter of the avoidance hole (201) is smaller than the diameter of the outer ring of the fixing ring (120), a height of the first annular side wall (140) is smaller than the height of the second annular side wall (150), the end of the first annular side wall (140) abuts against the upper end face of the tray (200), the end of the second annular side wall (150) passes through the avoidance hole (201), the end of the second annular side wall (150) is bent to form an annular flange, and the annular flange abuts against a lower end face of the tray (200).

6. The battery tray assembly according to claim 5, wherein the first annular side wall (140) is provided with an adhesive inlet (1401), the adhesive inlet (1401) is located at the end of the first annular side wall (140), and the adhesive inlet (1401) communicates with the annular adhesive storage groove (160).

7. The battery tray assembly according to any one of claims 1-6, wherein a lower end face of the tray (200) is provided with a reinforcing rib (240), and the reinforcing rib (240) is arranged around the avoidance holes (201).

8. The battery tray assembly according to any one of claims 1-6, wherein the tray (200) comprises a bottom plate (210) and side plates (220) which are connected with each other, and the avoidance holes (201) are formed in the bottom plate (210).

9. The battery tray assembly according to claim 8, wherein the upper end of the side plate (220) extends outwards to form a flange (230), and the upper end face of the flange (230) is provided with a hanging part (231).

10. The battery tray assembly according to claim 8, wherein the outer wall of the side plate (220) is convexly provided with a limiting block (221).

11. A battery module, comprising a plurality of cells, and the battery tray assembly according to any one of claims 1-10, wherein the plurality of cells are fixed in the battery tray assembly.
